# EUROPEAN PATENT APPLICATION

(11) **EP 2 521 386 A1**
(43) Date of publication of application: **07.11.2012**
(21) Application number: 10791320.4
(22) Date of filing: 14.05.2010
(51) Int. Cl.: H04W 12/00

(54) **METHOD, DEVICE AND SYSTEM FOR UPDATING SECURITY ALGORITHM OF MOBILE TERMINALS**

(30) Priority: 30.12.2009 CN 200910215596
(71) Applicant: ZTE Corporation, Shenzhen, Guangdong 518057 (CN)
(72) Inventor: CHEN, Bo, Shenzhen Guangdong 518057 (CN); JU, Fei, Shenzhen Guangdong 518057 (CN); YUAN, Lei, Shenzhen Guangdong 518057 (CN); YANG, Hanling, Shenzhen Guangdong 518057 (CN)
(74) Representative: Bongiovanni, Simone
(86) International application number: PCT/CN2010/072768
(87) International publication number: WO 2010/148814

(57) **Abstract**

A method, device and system for updating a security algorithm of a mobile terminal are disclosed in the present invention. The method includes the steps of: when a communication connection between a mobile terminal and a network side is established, transmitting a Device Management (DM) request message for obtaining state related information on a designated type to the mobile terminal; receiving the state related information on the designated type returned by the mobile terminal; and obtaining an algorithm identifier corresponding to the state related information and indicating the mobile terminal to update the security algorithm used locally according to the algorithm identifier. It is able to ensure the usage security of mobile terminals according to the present invention.

## Description

### Field of the present invention

The present invention relates to the communication field, in particular to a method, device and system for updating a security algorithm of a mobile terminal.

### Background of the present invention

At present, functions of a mobile terminal become more and more complex, and it is required to perform locking/unlocking control for the mobile terminal so as to improve the operation security thereof. The present locking/unlocking mode is classified into a software lock and a hardware lock.

The software lock is to lock/unlock all kinds of information/applications in the mobile terminal by adopting algorithms such as the Hash algorithm, DES algorithm, RSA public-key cryptographic algorithm and so on. The so-called hardware lock is to lock/unlock all kinds of information/applications in the mobile terminal by adopting a card locking machine or a network locking machine, wherein the mechanism of the card locking machine is to make the mobile terminal only identify the first inserted card and other cards can not be used, while the mechanism of the network locking machine is to make the mobile terminal only identify SIM cards in an designated operator network and SIM cards provided by other operators can not be used. Mobile terminals are generally produced by large batch, and the same batch or model of the mobile terminals generally adopt the same software lock or hardware lock, therefore, once the software lock or hardware lock of a certain mobile terminal is decrypted, there exists a risk that the other mobile terminals are decrypted by large batch, which greatly reduces the usage security of the mobile terminals.

### Summary of the present invention

The present invention mainly provides a method, device and system for updating a security algorithm of a mobile terminal, so as to improve the usage security of the mobile terminal.

According to one aspect of the present invention, a method for updating a security algorithm of a mobile terminal is provided, which includes the following steps of:
transmitting, when a communication connection is established between a mobile terminal and a network side, a Device Management (DM) request message for obtaining state related information of a designated type to the mobile terminal;
receiving the state related information of the designated type returned by the mobile terminal; and
obtaining an algorithm identifier corresponding to the state related information and indicating the mobile terminal to update a security algorithm locally used by the mobile terminal according to the algorithm identifier.

According to one aspect of the present invention, a management server is also provided, which includes:
a transmitting unit, configured to transmit, when a communication connection is established between a mobile terminal and a network side, a Device Management (DM) request message for obtaining state related information of a designated type to the mobile terminal;
a receiving unit, configured to receive the state related information of the designated type returned by the mobile terminal; and
a processing unit, configured to obtain an algorithm identifier corresponding to the state related information and indicate the mobile terminal to update a security algorithm locally used by the mobile terminal according to the algorithm identifier.

According to one aspect of the present invention, a mobile terminal is also provided, which includes:
a receiving unit, configured to receive, when a communication connection is established between the mobile terminal and a network side, a Device Management (DM) request message for obtaining state related information of a designated type sent by a management server;
a transmitting unit, configured to return the state related information of the designated type to the management server; and
an updating unit, configured to update a locally used security algorithm according to an algorithm identifier corresponding to the state related information sent by the management server.

According to one aspect of the present invention, a communication system is also provided, which includes:
a management server, configured to transmit, when a communication connection is established between a mobile terminal and a network side, a Device Management (DM) request message for obtaining state related information of a designated type to the mobile terminal, receive the state related information of the designated type returned by the mobile terminal, obtain an algorithm identifier corresponding to the state related information, and indicate the mobile terminal to update a security algorithm locally used by the mobile terminal according to the algorithm identifier; and
a mobile terminal, configured to establish the communication connection with the network side and update the security algorithm locally used according to an indication of the management server.

In virtue of the present invention, the mobile terminal is controlled and managed based on the DM service, and the mobile terminal is indicated, according to state related information reported by the mobile terminal, to select a corresponding security algorithm for updating, so that different security algorithms are used by the same batch and model of mobile terminals, therefore, the strength of the security algorithm is effectively improved to avoid the risk of batch decryption caused by decryption of one certain security algorithm and further ensure the usage security of the mobile terminal.

### Brief description of the drawings

Fig. 1 is a system architecture diagram of a communication system in an embodiment of the present invention;
Fig. 2A is a functional structure diagram of a management server in an embodiment of the present invention;
Fig. 2B is a functional structure diagram of a mobile terminal in an embodiment of the present invention;
Fig. 3 is a flow chart for updating an unlocking algorithm of a terminal in an embodiment of the present invention; and
Fig. 4 is a schematic diagram of a Flash storage unit in an embodiment of the present invention.

### Detailed description of the embodiments

In order to improve the usage security of a mobile terminal, in the embodiments of the present invention, multiple locking/unlocking algorithms are set inside the mobile terminal, and a network side indicates, when application environment of the mobile terminal changes, the mobile terminal to automatically update the locking/unlocking algorithm (called as security algorithm hereinafter) used by the mobile terminal to improve the usage security of the mobile terminal.

The method for updating a security algorithm of a mobile terminal in an embodiment of the present invention includes the steps of: transmitting, when a communication connection is established between a mobile terminal and a network side, a Device Management (DM) request message for obtaining state related information of a designated type to the mobile terminal; receiving the state related information of the designated type returned by the mobile terminal; and obtaining an algorithm identifier corresponding to the state related information and indicating the mobile terminal to update a security algorithm locally used by the mobile terminal according to the algorithm identifier.

By the above steps, the security algorithm locally used by the mobile terminal is updated according to the state information reported by the mobile terminal, which improves the usage security of the mobile terminal.

In the embodiment of the present invention, the flow for managing the mobile terminal is carried out based on a terminal management service; DM service is a mobile data value added service based on the OMA DM related standard which make the operators remotely manage the mobile terminal in a wireless manner, for example, in a communication manner of the HTTP, WAP and OBEX etc., a device management server performs operations such as the control and diagnosis of the mobile terminal, parameter collection and configuration, software updating and security control and so on by using device management instructions and instruction execution results. The DM service is the mobile data value added service based on the OMA SyncML DM related standard, and a DM client executed in a mobile phone is required to perform protocol-specified interactions with the management server to finish the SyncML DM function.

The preferable implementation manner of the present invention is illustrated in detail based on the accompanying drawings.

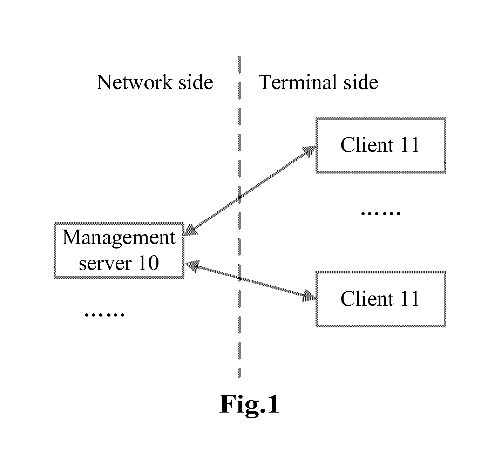

Referring to Fig. 1, in an embodiment of the present invention, a communication system includes a certain amount of management server(s) 10 and mobile terminal(s) 11, wherein:
the management server 10 is configured to transmit, when a communication connection is established between the mobile terminal 11 and a network side, a DM request message for obtaining state related information of a designated type to the mobile terminal 11, receive the state related information of the designated type returned by the mobile terminal 11, obtain an algorithm identifier corresponding to the state related information, and indicate the mobile terminal 11 to update a security algorithm locally used by the mobile terminal according to the algorithm identifier; and
the mobile terminal 11 is configured to establish the communication connection with the network side and update the security algorithm locally used according to an indication of the management server 10.

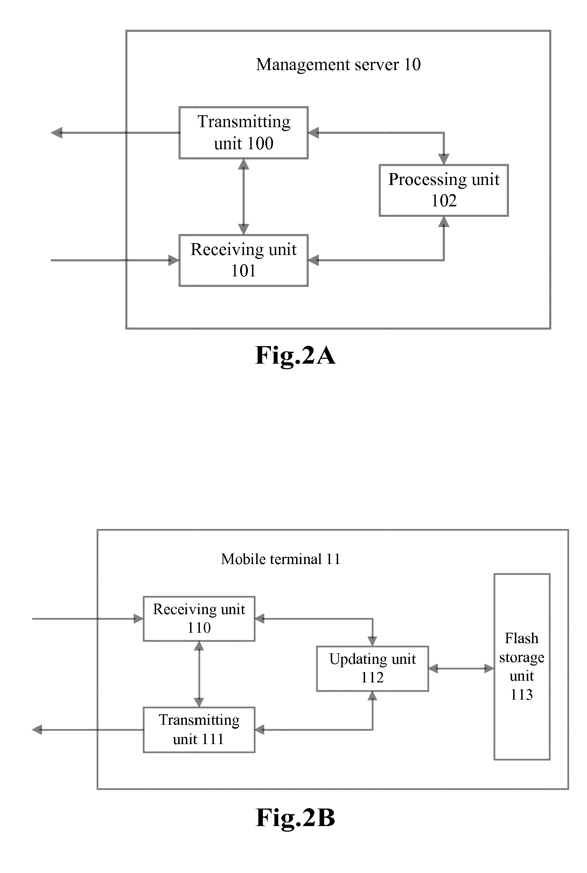

Referring to Fig. 2A, in an embodiment of the present invention, the management server 10 includes a transmitting unit 100, a receiving unit 101 and a processing unit 102, wherein:
the transmitting unit 100 is configured to transmit, when a communication connection is established between the mobile terminal 11 and a network side, a DM request message for obtaining state related information of a designated type to the mobile terminal 11;
the receiving unit 101 is configured to receive the state related information of the designated type returned by the mobile terminal 11; and
the processing unit 102 is configured to obtain an algorithm identifier corresponding to the state related information and indicate the mobile terminal 11 to update a security algorithm locally used by the mobile terminal according to the algorithm identifier.

Referring to Fig. 2B, in an embodiment of the present invention, the mobile terminal 11 includes a receiving unit 110, a transmitting unit 111 and an updating unit 112, wherein:
the receiving unit 110 is configured to receive, when a communication connection is established between the mobile terminal 11 and a network side, a DM request message for obtaining state related information of a designated type sent by the management server 10;
the transmitting unit 111 is configured to return the state related information of the designated type to the management server 10; and
the updating unit 112 is configured to update a locally used security algorithm according to an algorithm identifier corresponding to the state related information sent by the management server 10.

As shown in Fig. 2B, the mobile terminal 11 further includes a Flash storage unit 113 for storing at least two preset security algorithms. By storing the security algorithms in a Flash medium, the storing security can be provided.

In the embodiment of the present invention, based on the above system architecture, multiple kinds of security algorithms are preset in the mobile terminal 11 for subsequent selection; one algorithm therein is defaulted. In the embodiment, assuming that three kinds of security algorithms A, B and C are preset in the mobile terminal 11, wherein the algorithm A is the security algorithm defaulted while the mobile terminal 11 leaves the factory; and then, the management server 10 configures the mobile terminal via a DM service while the mobile terminal 11 performs a network registration, to make the mobile terminal 11 not use the defaulted algorithm A, and select another more suitable security algorithm based on the present operation environment. Therefore, the mobile terminal 11 can perform the authentication (such as PIN code authentication) according to the updated security algorithm while a card locking event happens.

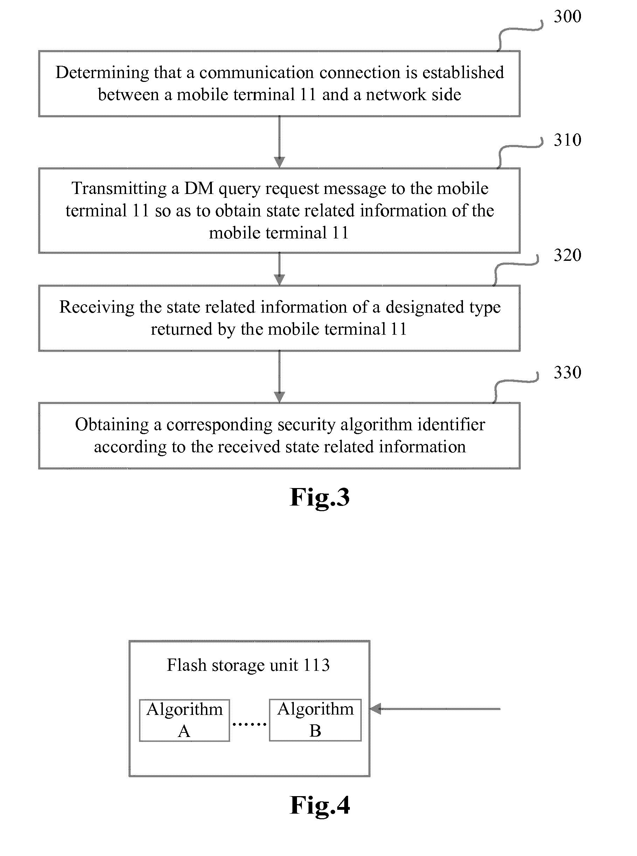

Referring to Fig. 3, in an embodiment of the present invention, a detailed flow for updating the security algorithm in the mobile terminal 10 by the management server 11 is as follows.

Step 300, determining that a communication connection is established between the mobile terminal 11 and a network side.

In the embodiment of the present invention, the communication connection between the mobile terminal 11 and the network side is established in the process that the mobile terminal 11 performs a network registration or the process that the mobile terminal 11 uses a designated communication service.

Step 310, transmitting a DM query request message to the mobile terminal 11, so as to obtain state related information of a designated type.

In the embodiment of the present invention, the state related information is the model of the mobile terminal 11, or type identifier of the communication service applied to be used by the mobile terminal 11, or the flag of whether the mobile terminal 11 applies a privacy service, or one or combination of the above state related information.

Step 320, receiving the state related information of the designated type returned by the mobile terminal 11.

Step 330, obtaining a corresponding algorithm identifier according to the received state related information.

Referring to Table 1, the corresponding relationship between the state related information and the security algorithms is shown as follows:

| State related information | Security algorithm identifier |
|---|---|
| The model of the mobile terminal being X | Algorithm B |
| Applying to use services of a VIP type | Algorithm C |
| Applying to use a privacy service | Algorithm C |
| ...... | ...... |

The content shown in Table 1 is only an example, and the corresponding relationship between the state related information and the security algorithm can be configured according to the specific application environment by managers, which will not be further detailed.

Step 340: transmitting the obtained security algorithm identifier to the mobile terminal 11, and indicating the mobile terminal 11 to update the locally defaulted security algorithm.

For example, the security algorithm identifier received by the mobile terminal 11 is algorithm B, then the locally defaulted algorithm A is updated to algorithm B.

Based on the above embodiment, if the mobile terminal 11 is locked when being used, for example, the user uses an illegal SIM card or the user input an illegal password and so on, the mobile terminal 11 prompts, after being locked, the corresponding dialog box to the user according to the locking/unlocking algorithm mechanism of algorithm B; after the user input the legal PIN code, the algorithm B is called for verification of the PIN code; if it is successfully decoded, the mobile terminal 11 restores the normal work, otherwise, the mobile terminal 11 keeps the locking state; if the times for inputting the false PIN code by the user exceeds a preset threshold, a dead locking operation is carried out on the mobile terminal 11.

Step 360, restoring the normal use state of the terminal and finishing the flow.

Step 370, the terminal failing to be unlocked, and keeping the current locking state. What should be noted is that if the user continuously try to input, the user needs to abide by rules such as the input allowing times specified by the operators and the limit measures after exceeding the attempt times (such as dead locking).

Referring to the Fig. 4, in an embodiment of the present invention, the security algorithm for locking/unlocking operation is stored in the storage area with high security, such as the FLASH area, and there can be at least two security algorithms. In the embodiment of the present invention, three algorithms are taken as an example and the implementation mode is not limited by the one and can be two, four and five and so on, and will not be further detailed.

To sum up, in the embodiments of the present invention, the management server 10 of the network side controls and manages the mobile terminal 11 based on a DM service, and indicates, according to the state related information reported by the mobile terminal 11, the mobile terminal 11 to select the corresponding security algorithm for updating, so that different security algorithms are used by the same batch and model of mobile terminals. Therefore, the strength of the security algorithm is effectively improved to avoid the risk of batch decryption caused by decryption of one certain security algorithm and further ensure the usage security of the mobile terminal.

Obviously, those skilled in the art are able to make changes and variations to the embodiments of the present invention without departing from the spirit and scope of the present invention. Therefore, if the changes and variations of the embodiments are within the scope of the claims of the present invention and the equivalent technology thereof, the embodiments in the present invention intend to include these changes and variations.

## Claims

1. A method for updating a security algorithm of a mobile terminal, **characterized by** comprising the steps of:
transmitting, when a communication connection is established between a mobile terminal and a network side, a Device Management (DM) request message for obtaining state related information of a designated type to the mobile terminal;
receiving the state related information of the designated type returned by the mobile terminal; and
obtaining an algorithm identifier corresponding to the state related information and indicating the mobile terminal to update a security algorithm locally used by the mobile terminal according to the algorithm identifier.

2. The method according to claim 1, **characterized in that** the step of establishing the communication connection between the mobile terminal and the network side comprises the step of:
the mobile terminal establishing the communication connection with the network side in a registration process; or,
the mobile terminal establishing the communication connection with the network side in a process of applying to use a communication service of a designated type.

3. The method according to claim 1 or 2, **characterized in that** the state related information comprises one of or the combination of the following: the model of the mobile terminal, a type identifier of a communication service applied to be used by the mobile terminal, and a flag of a privacy service applied by the mobile terminal.

4. A management server, **characterized by** comprising:
a transmitting unit, configured to transmit, when a communication connection is established between a mobile terminal and a network side, a Device Management (DM) request message for obtaining state related information of a designated type to the mobile terminal;
a receiving unit, configured to receive the state related information of the designated type returned by the mobile terminal; and
a processing unit, configured to obtain an algorithm identifier corresponding to the state related information and indicate the mobile terminal to update a security algorithm locally used by the mobile terminal according to the algorithm identifier.

5. The management server according to claim 4, **characterized in that** the transmitting unit is configured to transmit the DM request message to the mobile terminal when the mobile terminal establishes the communication connection with the network side in a registration process or in a process of applying to use a communication service of a designated type.

6. A mobile terminal, **characterized by** comprising:
a receiving unit, configured to receive, when a communication connection is established between the mobile terminal and a network side, a Device Management (DM) request message for obtaining state related information of a designated type sent by a management server;
a transmitting unit, configured to return the state related information of the designated type to the management server; and
an updating unit, configured to update a locally used security algorithm according to an algorithm identifier corresponding to the state related information sent by the management server.

7. The mobile terminal according to claim 6, **characterized by** further comprising:
a Flash storage unit, configured to store at least two preset security algorithms.

8. A communication system, **characterized by** comprising:
a management server, configured to transmit, when a communication connection is established between a mobile terminal and a network side, a Device Management (DM) request message for obtaining state related information of a designated type to the mobile terminal, receive the state related information of the designated type returned by the mobile terminal, obtain an algorithm identifier corresponding to the state related information, and indicate the mobile terminal to update a security algorithm locally used by the mobile terminal according to the algorithm identifier; and
a mobile terminal, configured to establish the communication connection with the network side and update the security algorithm locally used according to an indication of the management server.

9. The communication system according to claim 8, **characterized in that** the mobile terminal is configured to establish the communication connection with the network side in a registration process or in a process of applying to use a communication service of a designated type.

10. The communication system according to claim 8 or 9, **characterized in that** the mobile terminal stores at least two preset security algorithms in a local Flash storage area.
